# DEMANDE DE BREVET EUROPEEN

(11) **EP 0 617 080 A1**
(43) Date de publication de la demande: **28.09.1994**
(21) Numéro de dépôt: 94420099.7
(22) Date de dépôt: 23.03.1994
(51) Int. Cl.: C08K 5/54, C08L 27/06

(54) **Utilisation comme additif d'amélioration de Propriétés optiques, d'huiles silicones y-hydroxy-alkylées dans les compositions à base de polymère chloré**

(30) Priorité: 26.03.1993 FR 9303487
(71) Demandeur: RHONE-POULENC CHIMIE, 92408 Courbevoie Cédex (FR)
(72) Inventeur: Mur, Gilles, F-94100 Saint Maur des Roses (FR)
(74) Mandataire: Dubruc, Philippe

(57) **Abrégé**

Utilisation, comme additif d'amélioration de propriétés optiques (transparence ou brillance), d'une huile polydiorganosiloxanique γ-hydroxyalkylée contenant au moins une fonction γ-hydroxy-alkyle par molécule, de viscosité dynamique à 25°C de l'ordre de 20 à 2.000 mPa.s. , dans des compositions contenant
. 100 parties en poids d'un polymère chloré ;
. de 0,005 à 2 parties en poids de ladite huile silicone ;
. une quantité efficace d'au moins un stabilisant thermique ;
. de 1 à 20 parties en poids d'un élastomère renforçant choc.

Lesdites compositions peuvent être transformées par extrusion-soufflage, calandrage, extrusion, injection, moulage par rotation..., en articles de transparence ou de brillance améliorée.

## Description

La présente invention a pour objet l'utilisation comme additifs d'amélioration de propriétés optiques (transparence ou brillance), d'huiles γ-hydroxy-alkylées dans les compositions à base d'un polymère chloré.

Il est connu d'utiliser les huiles polyorganosiloxaniques γ-hydroxy-alkylées comme lubrifiants internes et externes des compositions à base de polymères chlorés (EP-A-225 261; EP-A-453 379). La demanderesse a maintenant trouvé que les compositions contenant ce type d'huile présente une transparence ou une brillance nettement supérieure à celle des compositions similaires contenant comme lubrifiant des huiles polyorganosiloxaniques non fonctionnalisées.

Selon l'invention, il s'agit de l'utilisation, comme additif d'amélioration de propriétés optiques, d'une huile polyorganosiloxanique γ-hydroxy-alkylée de formule générale (I) 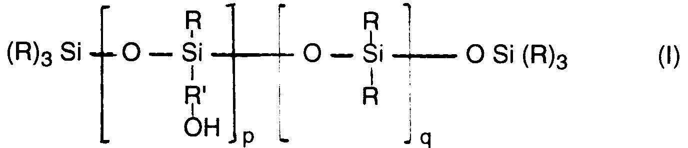
dans laquelle :
- les radicaux R, identiques ou différents, représentent un radical méthyle ou phényle, au moins 60 % en moles, de préférence 100% en moles, des radicaux R étant des radicaux méthyle,
- R' représente un radical alkylène, linéaire ou ramifié, ayant 2 à 6 atomes de carbone, de préférence triméthylène ou méthyl-2triméthylène,
- p représente un nombre moyen supérieur ou égal à 1, de préférence supérieur ou égal à 2,
- q représente un nombre moyen supérieur ou égal à 1, de préférence supérieur ou égal à 2,

la valeur de p+q étant telle que la viscosité dynamique à 25°C soit de l'ordre de 20 à 2.000 mPa.s., de préférence de l'ordre de 40 à 1.000 mPa.s.
dans des compositions contenant
. 100 parties en poids d'un polymère chloré;
. de 0,005 à 2 parties en poids, de préférence de 0,01 à 0,5 partie en poids de l'huile silicone de formule (I) ;
. une quantité efficace d'au moins un stabilisant thermique choisi parmi les dérivés organiques de métaux ou minéraux ;
. de 1 à 20 parties en poids, de préférence de 3 à 12 parties en poids d'un élastomère renforçant choc.

On entend par "propriétés optiques" des compositions, les propriétés de transparence des articles obtenus par extrusion-soufflage, calandrage, extrusion, injection, moulage par rotation ... de compositions non chargées et non pigmentées ou de brillance desdits articles obtenus à partir de compositions chargées et/ou contenant un ou des pigments ou colorants.

Les polymères chlorés sont notamment le polychlorure de vinyle (PVC), le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.
Ce sont en particulier les copolymères obtenus par copolymérisation du chlorure de vinyle avec d'autres monomères présentant une liaison éthylénique polymérisable, comme par exemple l'acétate de vinyle ou le chlorure de vinylidène les acides maléique ou fumarique ou leurs esters les oléfines telles que l'éthylène, le propylène, l'hexène ; les esters acryliques ou méthacryliques ; le styrène; les éthers vinyliques tels que le vinyldodécyléther.
Habituellement ces copolymères contiennent au moins 50 % en poids de motifs chlorure de vinyle, de préférence au moins 80 % en poids de motifs chlorure de vinyle.
De manière générale tout type de PVC convient, quel que soit son mode de préparation : polymérisation en masse, en suspension, en dispersion ou de tout autre type et quelle que soit sa viscosité intrinsèque.
Les homopolymères du chlorure de vinyle peuvent également être modifiés chimiquement, par exemple par chloration.

Parmi les dérivés de métaux, stabilisants thermiques, on peut citer :
. les dérivés organiques du zinc du type carboxylates ou phénolates, tels que les sels de zinc des acides maléique, acétique, diacétique, propionique, hexanoïque, éthyl-2 hexanoïque, décanoïque, undécanoïque, laurique, myristique, palmitique, stéarique, oléïque, ricinoléïque, béhénique, hydroxystéarique, hydroxyundécanoïque, benzoïque, phénylacétique, paratertiobutylbenzoïque et salicylique; les phénolates de zinc du phénol et des phénols substitués par un ou plusieurs radicaux alkyle, tels que les nonylphénols ; pour des raisons pratiques ou pour des raisons économiques, on choisit de préférence parmi les composés organiques du zinc cités précédemment, le propionate de zinc, l'éthyl-2 hexanoate de zinc, le laurate de zinc, le stéarate de zinc, I'oléate de zinc, le ricinoléate de zinc, le benzoate de zinc, le paratertiobutylbenzoate de zinc, le salicylate de zinc, le maléate de zinc et de mono(éthyl-2 hexyle), les nonylphénates de zinc. Généralement les composés organiques du zinc représentent de 0,005 % à 1 % en poids par rapport au polymère chloré, et de préférence de 0,01 % à 0,6 % en poids.
. les composés organiques du calcium, du magnésium , du baryum et des lanthanides du type carboxylates et les phénolates, tels que les sels de calcium, de magnésium, de baryum et de lanthanides des acides maléique, acétique, diacétique, propionique, hexanoïque, éthyl-2 hexanoïque, décanoïque, undécanoïque, laurique, myristique, palmitique, stéarique, oléïque, ricinoléique, béhénique, hydroxystéarique, hydroxyundécanoïque, benzoïque, phénylacétique, paratertiobutylbenzoïque et salicylique ; les phénolates de calcium, de magnésium, de baryum et de lanthanides du phénol et des phénols substitués par un ou plusieurs radicaux alkyle, tels que les nonylphénols ; pour des raisons pratiques ou pour des raisons économiques, on choisit de préférence parmi les composés organiques de calcium, de magnésium, de baryum et de lanthanides cités précédemment les sels des acides propionique, éthyl-2 hexanoïque, laurique, stéarique, oléïque, ricinoléïque, benzoïque, paratertiobutylbenzoïque, salicylique, du maléate de mono(éthyl-2 hexyle) ainsi que les nonylphénates de ces métaux. Généralement les composés organiques du calcium, du magnésium, du baryum et des lanthanides représentent de 0,005 % à 5 % en poids par rapport au poids du polymère chloré et de préférence de 0,02 % à 2 % en poids.
. les composés organiques de l'étain notamment du type organoétain sulfurés, tels que diméthylétain-bis-(thioglycolate d'éthyl-2 hexyle), le di-n-butylétain-bis(thioglycolate d'éthyl-2 hexyle), le di-n-octylétain-bis-(thioglycolate d'éthyl-2 hexyle). Généralement les composés organiques de l'étain représentent de 0,05% à 5% en poids par rapport au poids du polymère chloré et de préférence de 0,2% à 2% en poids.
. les huiles époxydées telles que l'huile de soja époxydée, l'huile de lin époxydée, les huiles de poissons époxydées ou la talloil époxydée, selon des quantités de l'ordre de 0,5 à 10% en poids par rapport au poids du polymère chloré.
. les sels de plomb basiques ou neutres d'acides minéraux (sulfurique, phosphorique ...). Généralement les composés du plomb représentent de 0,5% à 10% en poids par rapport au poids du polymère chloré et de préférence de 2% à 7% en poids.
. les stabilisants minéraux tels que les dawsonites, hydrotalcites, hydrogénocarbonates d'aluminium et de magnésium, phosphites de calcium ou de calcium et d'aluminium.

A côté de ces stabilisants thermiques dérivés de métaux peuvent être présents d'autres stabilisants thermiques usuels tels que les b-dicétones, les b-cétoaldéhydes, les dihydro-1,4 pyridines, ou secondaires tels que les polyols, les phosphites organiques.
Les b-dicétones ont été notamment décrites dans les brevets et certificats d'addition français publiés sous les numéros FR 2 292 227, FR 2 324 681, FR 2 351 149, FR 2 352 025, FR 2 383 988 et FR 2 456 132 et dans les brevets européens EP 0 040 286 et EP 0 046 161. Comme exemples non limitatifs de telles b-dicétones, on peut citer le benzoylstéaroylméthane, le dibenzoylméthane, la benzoylacétone, le benzoyl méthyl-3 butanoylméthane, les méthoxycarbonylbenzoylbenzoylméthanes, les bis-z-dicétones telles que le bis(acétylacéto)-1,4 butane, le bis(benzoylacéto)-1,8 octane, le bis(acétylacéto)-1,4 benzène. Lorsqu'elles sont présentes, les b-dicétones représentent de 0,005 % à 5 % en poids par rapport au poids du polymère chloré et de préférence de 0,01 % à 2 % en poids.
Les dihydro-1,4 pyridines sont généralement des dihydro-1,4 diméthyl-2,6 dicarboxylate-3,5 pyridines telles que celles qui sont décrites dans les brevets FR-A-2 239 496, FR-A-2 405 974 et FR-A-2 405 937. Habituellement ces dihydro-1,4 pyridines sont efficaces à des teneurs de 0,01 % à 5 % en poids par rapport au poids de polymère chloré et de préférence de 0,05 % à 2 % en poids par poids.
Les polyols ont généralement l'avantage d'allonger la durée de vie des polymères chlorés soumis à un traitement thermique. Généralement il est préférable que les polyols utilisés aient un point d'ébullition supérieur à 150°C et de préférence supérieur à 170°C, à cause de la mise en oeuvre à température élevée des polymères chlorés. A titre d'exemples de tels polyols on peut citer des triols comme le triméthylolpropane, le glycérol, l'hexanetriol-1,2,6, le butanetriol-1,2,4, le trishydroxyéthylisocyanurate; des tétrols comme le pentaérythritol, le diglycérol ; des pentitols comme le xylitol, le tétraméthylolcyclohexanol ; des hexitols comme le mannitol, le sorbitol, le dipentaérythritol ; des polyols partiellement estérifiés par un acide carboxylique et dans la formule desquels au moins 3 fonctions hydroxyle sont libres ; des alcools polyvinyliques, notamment ceux dans lesquels il reste moins de 30 % en moles de groupes esters par rapport à l'ensemble de leurs groupes esters et hydroxyle. Parmi ces polyols, les préférés sont le xylitol, le mannitol, le sorbitol, le tétraméthylolcyclohexanol et les alcools polyvinyliques définis précédemment. Lorsqu'il est présent, on utilise en général de 0,005 % à 1 % en poids de polyol par rapport au polymère chloré et de préférence de 0,01 % à 0,6 % en poids.
Les phosphites organiques sont notamment des phosphites aliphatiques, aromatiques ou des phosphites mixtes aliphatiques et aromatiques. Lorsqu'il est présent, le phosphite représente généralement de 0,05 % à 5 % en poids par rapport au polymère chloré et de préférence de 0,1 % à 2 % en poids.

Parmi les élastomères renforçant choc, on peut citer les polymères acrylonitrile/butadiène/styrène (ABS), méthacrylate de méthyle/butadiène/styrène (MBS), méthacrylate de méthyle/acrylonitrile/butadiène/styrène (MABS), styrène/butadiène/styrène (SBS), ...contenant en général au moins 35% de leur poids de motifs dérivés du butadiène

Peuvent également être présents dans lesdites compositions des additifs usuels tels que :
. des antioxydants phénoliques ;
. des agents anti-UV tels que les benzophénones, les benzotriazoles ou les amines stériquement encombrées (habituellement connues sous le terme de HALS).
. des charges minérales telles que le carbonate de calcium, la wollastonite ..., selon des quantités pouvant aller de 0,5 jusqu'à 100% en poids par rapport au polymère chloré ;
. des pigments tels que l'oxyde de titane ou des pigments organiques dérivés de l'anthraquinone ou des pigments azoïques.

Les compositions ci-dessus sont généralement des formulations rigides, c'est-à-dire sans plastifiant ou semi-rigides, c'est-à-dire avec des teneurs en plastifiant réduites, telles que pour les applications dans le bâtiment ou pour la fabrication de bouteilles. Mais les compositions selon l'invention peuvent également être utilisées dans des formulations plastifiées telles que pour la fabrication de films à usage agricole.

De manière habituelle, l'incorporation des différents stabilisants ou adjuvants est faite sur le polymère chloré à l'état de poudre.

On peut bien entendu préparer un mélange de 2 ou plusieurs des composés constitutifs des compositions avant leur incorporation dans le polymère chloré.

Toutes les méthodes usuelles d'incorporation des différents stabilisants ou adjuvants dans le polymère peuvent être utilisées. Par exemple l'homogénéisation de la composition polymérique peut être réalisée sur malaxeur ou mélangeur à rouleaux, à une température telle que la composition devienne fluide, normalement entre 150°C et 200°C pour le PVC et pendant une durée suffisante, de l'ordre de quelques minutes à quelques dizaines de minutes.

Les compositions de polymère chloré, et plus particulièrement de PVC, peuvent être mises en oeuvre selon toutes les techniques utilisées habituellement comme par exemple l'extrusion, l'injection, l'extrusion-soufflage, le calandrage ou le moulage par rotation.

Les exemples suivants sont donnés à titre indicatif et ne peuvent être considérés comme une limite du domaine et de l'esprit de l'invention.

### Exemples 1-2 : Calandrage de feuilles en copolymère CV/AV rigide

La composition utilisée est constituée de :
- copolymère chlorure de vinyle/acétate de vinyle obtenu par polymérisation en suspension, commercialisé par ATOCHEM.
- renforçant choc méthacrylate de méthyle/ butadiène/styrène BTA 702® commercialisé par ROHM et HAAS
- polymère acrylique K 120N ("processing aid" commercialisé par ROHM et HAAS)
- bis isooctylmercapto acétate de di n-octylétain
- huile de soja époxydée
- esters d'acides gras à longues chaînes LUBRIOL DF1®(lubrifiant interne) commrcialisé par COMMIEL
- ester d'acide gras LUBRIOL E192®, commercialisé par COMMIEL
- RHODIALUB X 60®, huile diméthylpolysiloxane γ-hydroxypropylée commercialisée par RHONE-POULENC, présentant les caractéristiques suivantes
   . Mn calculée : 1400
   . viscosité dynamique à 25°C : 60 mPa.s.
   . OH% en poids : 3±1

Les quantités respectives des différents constituants figurent au tableau 1.

On utilise comme appareillage un ensemble constitué par un malaxeur à cylindre et une calandre à trois cylindres, dont les températures sont les suivantes
. haut : 180°C
. milieu : 195°C
. bas : 187°C

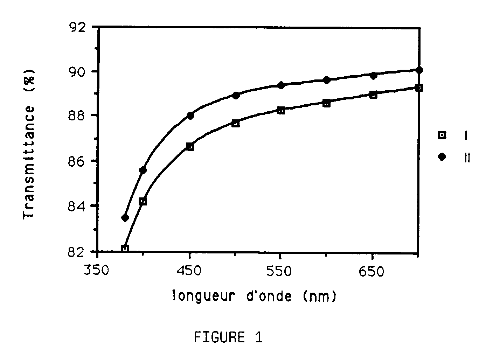

La matière est prégélifiée sur le malaxeur pendant 5 minutes à 165°C, puis déposée sur le cylindre supérieur de la calandre.
Les feuilles obtenues ont été évaluées visuellement suivant leur aspect de surface, en particulier suivant la présence éventuelle de défauts tels que bulles, fusées ou grains ; les résultats de cette évaluation figurent au tableau 1 ; le nombre de signes + croît avec le nombre de défauts.
La transparence des feuilles a été déterminée par mesure de la transmittance (exprimée en % de transmission) en fonction de la longueur d'onde dans le visible à l'aide d'un colorimètre du type Pacific Spectrograd® (commercialisé par Pacific Scientific).
Les courbes I (correspondant à l'exemple 1) et II (correspondant à l'exemple 2) sont données à la figure 1.

### Exemples 3-4 : extrusion de plaques profilés rigides en PVC

La composition utilisée est constituée de :
- polymère de chlorure de vinyle obtenu par polymérisation en suspension, présentant un K Wert de 67, commercialisé par ATOCHEM
- renforçant choc méthacrylate de méthyle/ butadiène/acrylonitrile KM 334® commercialisé par ROHM et HAAS
- un mélange à base de stéarate de calcium et de stéarate de zinc (1/1 en poids) comme stabilisant thermique
- du carbonate de calcium naturel broyé OMYALITE 95T® commercialisé par OMYA
- du dioxyde de titane rutile
- des cires esters de l'acide montanique à longue chaîne hydroxylée
- RHODIALUB X 60®
- RHODIALUB X 500® huile diméthylpolysiloxane γ-hydroxypropylée commercialisée par RHONE-POULENC, présentant les caractéristiques suivantes
   . Mn calculée 1500
   . viscosité dynamique à 25°C : 500 mPa.s.
   . OH% en poids : 4,5±1

Les quantités respectives des différents constituants figurent au tableau 2.

On utilise comme appareillage un ensemble constitué par une extrudeuse monovis cônique ayant les caractéristiques suivantes :
. diamètre : 40 mm
. longueur/diamètre : 20
. taux de compression : 2,8

et un banc d'étirage.
Les températures d'extrusion sont :
. début de corps de chauffe : 170°C
. milieu de corps de chauffe : 180°C
. fin de corps de chauffe : 185°C
. filière : 190°C

Les plaques obtenues ont été évaluées par des mesure de brillance à l'aide d'un appareil Bykometer Multigloss, selon la norme NFT 51 067.
La brillance a été mesurée à un angle de 60°C sur les deux faces des plaques extrudées.
Les résultats figurent au tableau 2.

**TABLEAU 1**

| **exemple** | **1** | **2** |
|---|---|---|
| **composition** | (parties en poids) | (parties en poids) |
| copolymère CV/AV | 100 | 100 |
| MBS | 6 | 6 |
| copolymère acrylique | 1 | 1 |
| octyl étain | 1,5 | 1,5 |
| huile de soja époxydée | 1 | 1 |
| lubrifiant interne | 1,2 | 0,7 |
| lubrifiant externe | 0,8 | 0,5 |
| RHODIALUB X 60® | - | 0,08 |

| **défauts** | | |
|---|---|---|
| bulles | nul | nul |
| fusées | ++ | + |
| grains | nul | nul |

**TABLEAU 2**

| **exemple** | **3** | **4** |
|---|---|---|
| **composition** | (parties en poids) | (parties en poids) |
| PVC | 100 | 100 |
| MBA | 7 | 7 |
| stabilisant Ca/Zn | 2 | 2 |
| CaCO₃ | 4 | 4 |
| TiO₂ | 5 | 5 |
| cires esters | 1 | 0,75 |
| RHODIALUB X 60® | - | 0,05 |
| RHODIALUB X 500® | - | 0,15 |

| **brillance à 60°** | | |
|---|---|---|
| face brillante | 21 | 37,5 |
| face opaque | 16,5 | 26,4 |

## Revendications

**1)** Utilisation, comme additif d'amélioration de propriétés optiques, d'une huile polyorganosiloxanique γ-hydroxy-alkylée de formule générale (I) 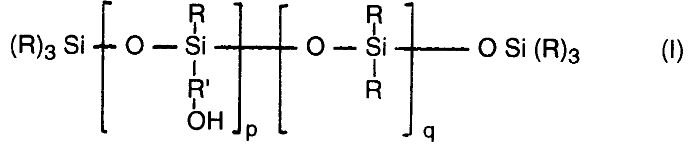 dans laquelle :
- les radicaux R, identiques ou différents, représentent un radical méthyle ou phényle, au moins 60 % en moles, de préférence 100% en moles, des radicaux R étant des radicaux méthyle,
- R' représente un radical alkylène, linéaire ou ramifié, ayant 2 à 6 atomes de carbone,
- p représente un nombre moyen supérieur ou égal à 1, de préférence supérieur ou égal à 2,
- q représente un nombre moyen supérieur ou égal à 1, de préférence supérieur ou égal à 2,
la valeur de p+q étant telle que la viscosité dynamique à 25°C soit de l'ordre de 20 à 2.000 mPa.s.,
dans des compositions contenant
. 100 parties en poids d'un polymère chloré ;
. de 0,005 à 2 parties en poids, de préférence de 0,01 à 0,5 partie en poids de l'huile silicone de formule (I) ;
. une quantité efficace d'au moins un stabilisant thermique choisi parmi les dérivés organiques de métaux ou minéraux ;
. de 1 à 20 parties en poids, de préférence de 3 à 12 parties en poids d'un élastomère renforçant choc.

**2)** Utilisation selon la revendication 1), comme additif d'amélioration de propriétés optiques, d'une huile polyorganosiloxanique γ-hydroxy-alkylée de formule générale (I), dans laquelle R' représente un radical triméthylène ou méthyl-2 triméthylène et la valeur de p+q est telle que la viscosité dynamique à 25°C soit de l'ordre de l'ordre de 40 à 1.000 mPa.s.

**3)** Utilisation d'une huile polyorganosiloxanique γ-hydroxy-alkylée de formule générale (I) définie à la revendication 1) ou 2) , comme additif d'amélioration de la transparence d'articles obtenus par extrusion-soufflage, calandrage, extrusion, injection, moulage par rotation... de compositions non chargées et non pigmentées contenant
. 100 parties en poids d'un polymère chloré ;
. de 0,005 à 2 parties en poids, de préférence de 0,01 à 0,5 partie en poids de l'huile silicone de formule (I) ;
. une quantité efficace d'au moins un stabilisant thermique choisi parmi les dérivés organiques de métaux ou minéraux ;
. de 1 à 20 parties en poids, de préférence de 3 à 12 parties en poids d'un élastomère renforçant choc.

**- 4)** Utilisation d'une huile polyorganosiloxanique γ-hydroxy-alkylée de formule générale (I) définie à la revendication 1) ou 2) , comme additif d'amélioration de la brillance d'articles obtenus par extrusion-soufflage, calandrage, extrusion, injection, moulage par rotation... de compositions chargées et/ou pigmentées contenant
. 100 parties en poids d'un polymère chloré;
. de 0,005 à 2 parties en poids, de préférence de 0,01 à 0,5 partie en poids de l'huile silicone de formule (I) ;
. une quantité efficace d'au moins un stabilisant thermique choisi parmi les dérivés organiques de métaux ou minéraux;
. de 1 à 20 parties en poids, de préférence de 3 à 12 parties en poids d'un élastomère renforçant choc.
